(19) Europäisches Patentamt
European Patent Office
Office européen des brevets

(11) **EP 1 908 810 B1**

(12) **EUROPEAN PATENT SPECIFICATION**

(45) Date of publication and mention
of the grant of the patent:
**08.04.2009 Bulletin 2009/15**

(51) Int Cl.:
**C09K 11/77** (2006.01)

(21) Application number: **07253879.6**

(22) Date of filing: **28.09.2007**

(54) **Phosphor**

Phosphor

Phosphore

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **06.10.2006 JP 2006275356**

(43) Date of publication of application:
**09.04.2008 Bulletin 2008/15**

(73) Proprietor: **NEMOTO & CO., LTD.**
**Tokyo 167-0043 (JP)**

(72) Inventors:
• **Takahara, Takeshi**
**Tokyo 167-0043 (JP)**
• **Murase, Takashi**
**Tokyo 167-0043 (JP)**
• **Aoki, Yasushi**
**Tokyo 167-0043 (JP)**

(74) Representative: **Shindler, Nigel**
**Brookes Batchellor LLP**
**102-108 Clerkenwell Road**
**London EC1M 5SA (GB)**

(56) References cited:
**EP-A- 1 605 030          WO-A-20/06068359
WO-A-20/07037662**

**Description**

FIELD OF THE INVENTION

The present invention relates to a phosphor, and in particular an orange-emitting phosphor that absorbs and emits light.

BACKGROUND OF THE INVENTION

Conventionally, it has been known to use phosphors that absorb visible light rays in a short wavelength region such as blue light rays and ultraviolet rays and convert these light rays in wavelength to visible lights with longer wavelengths such as red and green lights and obtain visible light such as white light by combining these phosphors.
In particular, as a light source of visible light rays in the short wavelength region or ultraviolet rays, known is a semiconductor light-emitting element, for example, a gallium nitride (GaN)-based blue light-emitting diode or the like. Moreover, a light-emitting element that is constructed in combination with a phosphor serving as a wavelength converting material to emit visible light such as white light features a small amount of power consumption and a long lifespan, and has therefore received attention as a light-emitting source of an image display device or a lighting system in recent years.
Moreover, for this light-emitting element, as described in, for example, Japanese Laid-Open Patent Publication No. 10-242513, a phosphor serving as a converting material absorbs visible light in the blue region emitted by a GaN-based blue light-emitting diode to emit yellow light, and emits white as a result of mixing with blue light of the light-emitting diode not absorbed in this phosphor.
However, this white light emission lacks color rendering properties as this is formed of light of a blue color and a yellow color being a complementary color of this blue color.
In addition, as a light-emitting element improved in color rendering properties of white light formed of light of these blue and yellow colors, as described in, for example, Japanese Laid-Open Patent Publication No. 2002-60747, known is one that forms white light by combination of a blue light-emitting diode, a green-emitting phosphor, and a red-emitting phosphor or an orange-emitting phosphor.
However, a stable phosphor that efficiently emits red or orange light upon excitation by irradiation of blue light is still as yet unknown. For example, an alkaline-earth metal sulfide phosphor by activation of divalent europium ($Eu^{2+}$) emits a reddish color, but easily undergoes a chemical change, and may produce a harmful sulfur compound such as a hydrogen sulfide gas. In particular, when a light-emitting diode is formed by this alkaline-earth metal sulfide-based phosphor, there is a problem such as corrosion of a surrounding material and the like.
In addition, as a phosphor that emits an orangish color, as disclosed in, for example, Japanese Laid-Open Patent Publication No. 2006-36943 or Japanese Translation of International Application No. 2006-514152, known is an alkaline-earth metal silicate phosphor by activation of divalent europium ($Eu^{2+}$) such as $Sr_3SiO_5$:Eu. However, this alkaline-earth metal silicate phosphor is not sufficient in luminance and has a problem that it is not easy to secure high luminance.
The present invention has been made in view of such problems, and it is an object of the present invention to provide an orange-emitting phosphor that emits at a high luminance.

SUMMARY OF THE INVENTION

A phosphor of the present invention is represented by a general formula of a $(Sr_{1-x}Eu_{x(1-y)}Yb_{xy})\,O \cdot SiO_2$, wherein a is $2.9 \leq a \leq 3.1$, x is $0.005 \leq x \leq 0.1$, and y is $0.001 \leq y \leq 0.1$.
According to the present invention, an orange-emitting phosphor that emits at a high luminance can be obtained.

BRIEF DESCRIPTION OF THE DRAWING

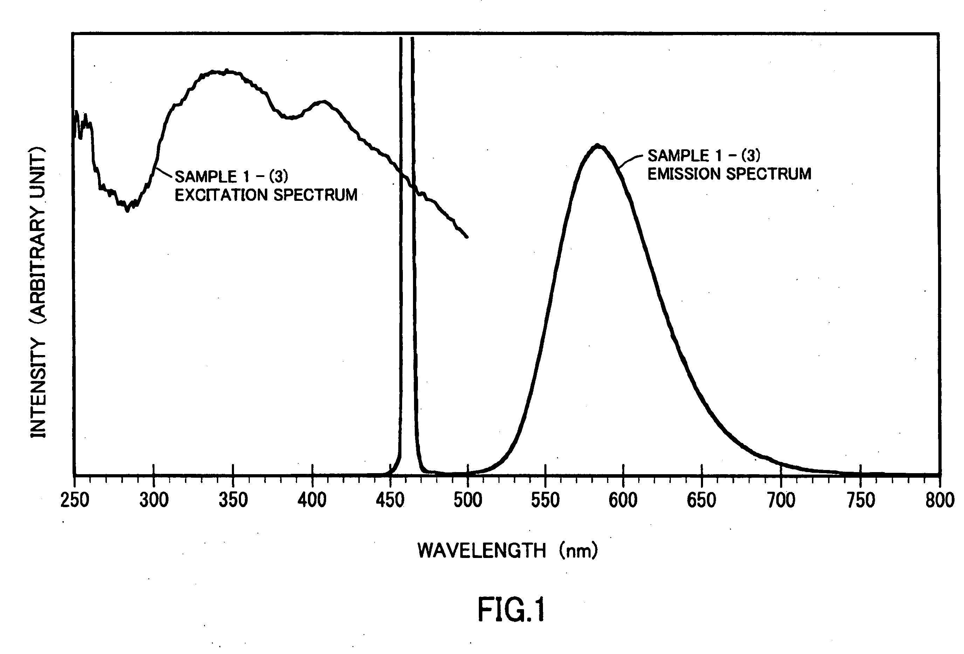

FIG. 1 is a graph showing an excitation spectrum and an emission spectrum of an orange-emitting phosphor of an embodiment of the present invention.

DETAILED DESCRIPTION OF THE PREFERRED EMBODIMENT

Hereinafter, processes for manufacturing an orange-emitting phosphor in an embodiment of the present invention will be described.
The orange-emitting phosphor of the present invention is obtained by mixing compounds containing component elements at a predetermined ratio and firing a mixture obtained by this mixing under predetermined conditions.

First, for a starting material of this orange-emitting phosphor, an oxide containing strontium (Sr), europium (Eu), and ytterbium (Yb) or a compound such as a carbonate, a nitrate, an oxalate, a hydroxide, a fluoride, or a chloride that is changed to an oxide by firing can be used.

In addition, as a material of silicon (Si), silica ($SiO_2$) can be used, however, besides this silicon, silicon nitride ($Si_3N_4$) may be used. And, when this silicon nitride is used, this is difficult to fuse under a high temperature at the time of firing, which thus enables firing at a higher temperature.

Moreover, the type and mixing ratio of these starting materials are selected according to the composition of an orange-emitting phosphor to be prepared.

Furthermore, the mixed starting materials are fired under predetermined conditions. The atmosphere at this time of firing is suitably a mixed gas atmosphere of hydrogen and nitrogen, and the concentration of hydrogen gas in this mixed gas atmosphere of hydrogen and nitrogen is suitably within a range of not less than 1% and not more than 5%.

In addition, the firing temperature at this time of firing is suitably not less than 1200°C and not more than 1350°C, and when this firing temperature is less than 1200°C, the reaction speed of a solid-phase reaction of the starting materials is slowed. On the other hand, when this firing temperature exceeds 1350°C, the materials are significantly sintered and fused. This firing temperature is more suitably not less than 1250°C and not more than 1300°C. At this time, when $Si_3N_4$ is used for the silica (Si) material, it becomes possible to raise the firing temperature to 1500°C, which thus allows firing at a higher temperature, whereby an orange-emitting phosphor further excellent in crystallinity and with a high luminance is provided.

Furthermore, the firing time at this time of firing is suitably 0.5 hours or more. That is, when this firing time is less than 0.5 hours, the solid-phase reaction is insufficient, so that satisfactory phosphor particles can no longer be obtained. In addition, this firing time is more suitably 1 hour or more.

An objective orange-emitting phosphor can be obtained by a solid-phase reaction as a result of conducting firing under these conditions. Immediately after this firing, the phosphor is usually in a state of agglomerated powder, and thus in order to use this powder-like phosphor as a phosphor for an LED, the synthesized powder-like phosphor is manufactured into a product of an orange-emitting phosphor with a predetermined particle size through treatment processes of dispersion and washing.

Moreover, this orange-emitting phosphor absorbs visible light rays in the short wavelength region such as blue light rays and ultraviolet rays and emits visible light with a longer wavelength such as orange light being within an emission peak wavelength range of not less than 570nm and not more than 600nm. Furthermore, this orange-emitting phosphor can construct a white light-emitting element improved in color rendering properties by combination with a semiconductor light-emitting element such as a light-emitting diode (LED) or a laser diode (LD).

Next, the construction and characteristics of an orange-emitting phosphor of the present invention will be described as an example of the first embodiment.

Example 1

To start with, description will be given of characteristics of an orange-emitting phosphor when x representing the total amount of europium (Eu) serving as an activator and ytterbium (Yb) serving as a coactivator has been changed.

First, 144.7g (0.98 mols of Sr) of a strontium carbonate ($SrCO_3$) powder as being a material of strontium (Sr), 3.41g (0.0194 mols of Eu) of a europium oxide ($Eu_2O_3$) powder as being a material of europium (Eu), 0.12g (0.0006 mols of Yb) of an ytterbium oxide ($Yb_2O_3$) powder as being a material of ytterbium (Yb), and 20.0g (0.333 mols of Si) of a silicon dioxide ($SiO_2$) powder as being a material of silicon (Si) are sufficiently well mixed.

Then, a mixture of these powders is filled inside an alumina container and was fired in an atmosphere of 3% hydrogen ($H_2$) plus 97% nitrogen ($N_2$) for 1 hour at 1300°C. After this firing, a phosphor obtained through a washing treatment and a dispersion treatment is provided as a phosphor of Sample 1-(3).

This phosphor of Sample 1-(3) is represented by a general formula: $3(Sr_{0.98}Eu_{0.0194}Yb_{0.0006})O \cdot SiO_2$. Here, y representing a ratio to substitute ytterbium (Yb) for a part of europium (Eu) is 0.03.

Similarly, phosphors were prepared under the same conditions as those of Sample 1-(3) except that y representing a ratio to substitute ytterbium (Yb) for a part of europium (Eu) was changed to 0.001, 0.01, 0.03, 0.07, 0.1, and 0.2 as shown in Table 1, and were provided as phosphors of Sample 1-(1), Sample 1-(2), and Sample 1-(4) to Sample 1-(6).

In addition, for comparison, a conventional phosphor that is excited by light in the blue region and emits light in the orange region to the red region, that is, a $Sr_3SiO_5$:Eu phosphor (general formula: $3(Sr_{0.98}Eu_{0.02})O \cdot SiO_2$) using no ytterbium (Yb), was prepared by the same method, and was provided as a phosphor of Comparative Example 1.

Table 1

| Sample | Yb substitution rate $y$ | General formula |
|---|---|---|
| Comparative Example 1 | 0 | $3(Sr_{0.98}Eu_{0.02})O \cdot SiO_2$ |
| Sample 1-(1) | 0.001 | $3(Sr_{0.98}Eu_{0.01998}Yb_{0.00002})O \cdot SiO_2$ |
| Sample 1-(2) | 0.01 | $3(Sr_{0.98}Eu_{0.0198}Yb_{0.0002})O \cdot SiO_2$ |
| Sample 1-(3) | 0.03 | $3(Sr_{0.98}Eu_{0.0194}Yb_{0.006})O \cdot SiO_2$ |
| Sample 1-(4) | 0.07 | $3(Sr_{0.98}Eu_{0.0186}Yb_{0.0014})O \cdot SiO_2$ |
| Sample 1-(5) | 0.1 | $3(Sr_{0.98}Eu_{0.018}Yb_{0.002})O \cdot SiO_2$ |
| Sample 1-(6) | 0.2 | $3(Sr_{0.98}Eu_{0.016}Yb_{0.004})O \cdot SiO_2$ |

Next, emission characteristics of the obtained phosphors of Sample 1-(1) to Sample 1- (6) and Comparative Example 1 were measured.

At this time, as the emission characteristics, an emission spectrum and an excitation spectrum were first measured, by use of Fluorescence Recording Spectrophotometer (Model: F-4500 Hitachi, Ltd.), by placing each of the samples in a powder sample cell with a silica glass window. The emission spectrum was measured by irradiating light in the blue region with an excitation wavelength of 465nm, while the excitation spectrum was measured by using an emission wavelength of 590nm as a monitor wavelength.

The excitation spectrum and the emission spectrum of Sample 1-(3) out of measurement results of these samples are shown in FIG. 1. It is understood that the phosphor of Sample 1- (3) has characteristics of, as shown in FIG. 1, being excited by light in the near-ultraviolet region to the blue region and efficiently emitting light in the orange region to the red region.

In addition, the emission spectrum of Comparative Example 1 not containing ytterbium (Yb) was almost the same as that of Sample 1-(3).

Furthermore, luminances were calculated from these emission spectra. Concretely, when the emission intensity at each wavelength $\lambda$ was represented by $P(\lambda)$, luminance B of each phosphor was calculated by use of numerical expression 1.

$$B = \frac{\int_{470}^{700} P(\lambda)V(\lambda)d\lambda}{\int_{470}^{700} P(\lambda)d\lambda}$$

Here, $V(\lambda)$ in this numerical expression 1 indicates standard luminous efficiency, and the integration range of the wavelength $\lambda$ was provided as a range of not less than 470nm and not more than 700nm. As a result, the obtained luminance B was shown in Table 2 as a relative luminance to luminance of Comparative Example 1 provided as 100.

Table 2

| Sample | Yb substitution rate $y$ | Relative luminance |
|---|---|---|
| Comparative Example 1 | 0 | 100 |
| Sample 1-(1) | 0.001 | 102 |
| Sample 1-(2) | 0.01 | 112 |
| Sample 1-(3) | 0.03 | 120 |
| Sample 1-(4) | 0.07 | 108 |
| Sample 1-(5) | 0.1 | 102 |
| Sample 1-(6) | 0.2 | 95 |

As shown in Table 2, it was understood that, in the case of Sample 1-(1) to Sample 1-(5) where y representing a ratio to substitute ytterbium (Yb) for a part of europium (Eu) was not less than 0.001 and not more than 0.1, the relative luminance was improved from that of Comparative Example 1. Furthermore, it was understood that, in the case where y was not less than 0.01 to not more than 0.07, the relative luminance was further improved.

However, in the case where y was less than 0.001, there was no great difference in relative luminance from Comparative Example 1, and in the case of Sample 1- (6) where y was 0.2 exceeding 0.1, the relative luminance was lowered.

As a result, it was understood that, in the case where y representing a ratio to substitute ytterbium (Yb) for a part of europium (Eu) was not less than 0.001 and not more than 0.1, the luminance is improved, and in the case where y is not less than 0.01 and not more than 0.07, the luminance is further improved.

Example 2

Next, description will be given of characteristics of an orange-emitting phosphor in the case where a total amount x of europium (Eu) and ytterbium (Yb) has been changed.

As shown in Table 3, phosphors were prepared by the same manufacturing method as that of Example 1 except that y representing a ratio to substitute ytterbium (Yb) for a part of europium (Eu) was fixed to 0.03 and the total amount x of europium (Eu) and ytterbium (Yb) was changed to not less than 0.005 and not more than 0.15, and were provided as phosphors of Sample 2-(1) to Sample 2-(5).

Table 3

| Sample | Eu concentration | Yb concentration | Eu+Yb concentration x | General formula |
|---|---|---|---|---|
| Sample 2-(1) | 0.00485 | 0.00015 | 0.005 | $3 (Sr_{0.98}Eu_{0.00485}Yb_{0.00015})O \cdot SiO_2$ |
| Sample 2-(2) | 0.0097 | 0.0003 | 0.01 | $3 (Sr_{0.98}Eu_{0.0097}Yb_{0.0003})O \cdot SiO_2$ |
| Sample 2-(3) | 0.0291 | 0.0009 | 0.03 | $3 (Sr_{0.98}Eu_{0.0291}Yb_{0.0009})O \cdot SiO_2$ |
| Sample 2-(4) | 0.097 | 0.003 | 0.1 | $3(Sr_{0.98}Eu_{0.0097}Yb_{0.003})O \cdot SiO_2$ |
| Sample 2-(5) | 0.1455 | 0.0045 | 0.15 | $3 (Sr_{0.98}Eu_{0.1455}Yb_{0.0046})O \cdot SiO_2$ |

Then, luminances of the obtained Sample 2-(1) to Sample 2-(5) were measured by the same method as that of Example 1, and results of this measurement are shown in Table 4 as relative luminances to that of Comparative Example 1 together with that of Sample 1-(3).

Table 4

| Sample | Eu concentration | Yb concentration | Eu+Yb concentration x | Relative luminance |
|---|---|---|---|---|
| Sample 2-(1) | 0.00485 | 0.00015 | 0.005 | 102 |
| Sample 2-(2) | 0.0097 | 0.0003 | 0.01 | 110 |
| Sample 1-(3) | 0.0194 | 0.0006 | 0.02 | 120 |
| Sample 2-(3) | 0.0291 | 0.0009 | 0.03 | 115 |
| Sample 2-(4) | 0.097 | 0.003 | 0.1 | 102 |
| Sample 2-(5) | 0.1455 | 0.0045 | 0.15 | 70 |

As a result, as shown in Table 4, it was understood that, when y representing a ratio to substitute ytterbium (Yb) for a part of europium (Eu) was 0.03 and the total amount x of europium (Eu) and ytterbium (Yb) was changed, in the case of Sample 2-(1) to Sample 2-(4) where this total amount x was not less than 0.005 and not more than 0. 1, the relative luminance was improved in comparison with that of Comparative Example 1 . In particular, in the case of Sample 2-(2) to Sample 2-(3) where x was not less than 0.01 and not more than 0.03, since the relative luminance becomes 110 or more, the luminance was further improved. However, in the case of Sample 2-(5) where the total amount x of europium (Eu) and ytterbium (Yb) exceeds 0.1, the luminance was lowered by concentration quenching.

Example 3

Next, description will be given of characteristics of an orange-emitting phosphor in the case where a representing a ratio of an alkaline-earth metal oxide of a phosphor host has been changed.

As shown in Table 5, phosphors were prepared by the same manufacturing method as that of Example 1 except that the total amount x of europium (Eu) and ytterbium (Yb) was provided as 0.015, y representing a ratio to substitute ytterbium (Yb) for a part of europium (Eu) was provided as 0.03, and a in the general formula of a $(Sr_{1-x}Eu_{x(1-y)}Yb_{xy})O \cdot SiO_2$ was changed to not less than 2.85 and not more than 3.15, and were provided as phosphors of Sample 3-(1) to Sample 3-(7).

Table 5

| Sample | a | General formula |
|---|---|---|
| Sample 3-(1) | 2.85 | 2.85 $(Sr_{0.985}Eu_{0.01455}Yb_{0.00045})O \cdot SiO_2$ |
| Sample 3-(2) | 2.9 | 2.9 $(Sr_{0.985}Eu_{0.01455}Yb_{0.00045})O \cdot SiO_2$ |
| Sample 3-(3) | 2.95 | 2. 95 $(Sr_{0.985}Eu_{0.01455}Yb_{0.00045})O \cdot SiO_2$ |
| Sample 3-(4) | 3 | 3 $(Sr_{0.985}Eu_{0.01455}Yb_{0.00045})O \cdot SiO_2$ |
| Sample 3-(5) | 3.05 | 3.05 $(Sr_{0.985}Eu_{0.01455}Yb_{0.00045})O \cdot SiO_2$ |
| Sample 3-(6) | 3.1 | 3.1$(Sr_{0.985}Eu_{0.01455}Yb_{0.00045})O \cdot SiO_2$ |
| Sample 3-(7) | 3.15 | 3.15$(Sr_{0.985}Eu_{0.01455}Yb_{0.00045})O \cdot SiO_2$ |

Then, luminances of the obtained Sample 3-(1) to Sample 3-(7) were measured by the same method as that of Example 1, and results of this measurement are shown in Table 6 as relative luminances to that of Comparative Example 1.

Table 6

| Sample | a | Relative luminance |
|---|---|---|
| Sample 3-(1) | 2.85 | 95 |
| Sample 3-(2) | 2.9 | 102 |
| Sample 3-(3) | 2.95 | 112 |
| Sample 3-(4) | 3 | 116 |
| Sample 3-(5) | 3.05 | 107 |
| Sample 3-(6) | 3.1 | 102 |
| Sample 3-(7) | 3.15 | 93 |

As a result, as shown in Table 6, in the case of Sample 3-(1) where a representing a ratio of an alkaline-earth metal oxide of a phosphor host was changed is less than 2.9, orange light emission luminance when being excited by light in the blue region was lowered. In addition, in the case of Sample 3-(7) where a exceeds 3.1, absorption of excitation light at the time of firing was reduced, efficiency of the phosphor was lowered, and thus emission luminance was lowered.

As described above, the phosphor prepared by adding europium as an activator and further by adding ytterbium as a coactivator to an alkaline-earth metal silicate becomes an orange-emittingphosphor that has a high degree of safetywithout producing a harmful gas or the like and emits light in the orange region at a high luminance, in particular, when being excited by light in the blue region.

Generally, it has been known that divalent ytterbium ($Yb^{2+}$) usually shows emission by an f-d transition from $4f^{13}5d$ to $4f^{14}$, and the emission peak wavelength is dependent on a phosphor host, while with regard to an orange-emitting phosphor represented by a general formula of $a(Sr_{1-x}Eu_{x(1-y)}Yb_{xy})O \cdot SiO_2$, it could be confirmed that no new light emission is observed even when ytterbium (Yb) elements are introduced into this orange-emitting phosphor, and for divalent europium ($Eu^{2+}$) being the other luminescence center, an orange light emission by an f-d transition from

$4f^6 5d$ to $4f^7$ is enhanced.

That is, in this orange-emitting phosphor, divalent ytterbium ($Yb^{2+}$) shows a sensitization effect on emission of divalent europium ($Eu^{2+}$).

Moreover, when y representing a ratio to substitute ytterbium (Yb) being a coactivator for a part of europium (Eu) being an activator is 0.001 or less, the effect of this substitution of ytterbium (Yb) for a part of europium (Eu) is no longer exhibited. In addition, when this y exceeds 0.1, emission luminance is lowered.

Furthermore, when x representing a total amount of europium (Eu) and ytterbium (Yb) exceeds 0.1, luminance intensity is lowered by concentration quenching. In addition, when this x is less than 0.005, since the concentration of the activator is insufficient, emission luminance is lowered.

On the other hand, when a representing a ratio of an alkaline-earth metal oxide of a phosphor host is less than 2. 9, orange light emission luminance when being excited by light in the blue region is lowered. In addition, when a exceeds 3.1, absorption of excitation light at the time of firing is reduced, efficiency of the phosphor is lowered, whereby emission luminance is lowered.

Therefore, by providing a representing a ratio of an alkaline-earth metal oxide of a phosphor host as $2.9 \leq a \leq 3.1$, providing x representing a total amount of europium (Eu) and ytterbium (Yb) as $0.005 \leq x \leq 0.10$, and providing y representing a ratio to substitute ytterbium (Yb) for a part of europium (Eu) as $0.001 \leq x \leq 0.1$, an orange-emitting phosphor that has a high degree of safety without producing a harmful gas or the like and emits orange at a high luminance, can be provided.

Field of industrial application

The orange-emitting phosphor of the present invention can construct a whitish visible light-emitting element, by combination with a light-emitting element that emits visible light rays or the like in a short wavelength region such as blue light rays, as a result of mixing between the visible light rays or the like in the short wavelength region such as blue light rays emitted by this light-emitting element and visible light rays on the long wavelength side fluorescently emitted by the orange-emitting phosphor.

Furthermore, by using a light-emitting diode or a laser diode or the like as this light-emitting element to be combined with the orange-emitting phosphor, an excellent whitish visible light-emitting element with a higher luminance can be constructed.

Moreover, these whitish visible light-emitting elements can be widely used as light-emitting sources of image display devices or lighting systems since these are small in the amount of power consumption and have long lifespans. In particular, by using the orange-emitting phosphor of the present invention for a whitish visible light-emitting element such as a white light-emitting diode, light in the orange region to the red region can be supplemented to improve color rendering properties, and thus this can be used also for purposes such as illumination.

## Claims

1. A phosphor represented by a general formula of
   $a(Sr_{1-x}Eu_{x(1-y)}Yb_{xy})\, O \cdot SiO_2$, wherein
   a is $2.9 \leq a \leq 3.1$,
   x is $0.005 \leq x \leq 0.1$, and
   y is $0.001 \leq y \leq 0.1$.

2. A phosphor according to claim 1 comprising an orange-emitting phosphor that emits orange light by absorbing at least visible light rays or ultraviolet rays.

3. An element for emitting substantially white light comprising a phosphor as claimed in claim 1 or claim 2 and a light emitting element that emits visible light rays in the blue region.

4. An element for emitting substantially white light according to claim 3, wherein the element is a light emitting diode.

5. An element for emitting substantially white light according to claim 3, wherein the element is a laser diode.

## Patentansprüche

1. Phosphor, dargestellt durch eine generelle Formel
   $a(Sr_{1-x}EU_{x(1-y)}Yb_{xy})\, O \cdot SiO_2$, wobei
   a $2.9 \leq a \leq 3.1$ ist,
   x $0.005 \leq x \leq 0.1$ ist, und

y 0.001 ≤ y ≤ 0.1 ist.

2. Phosphor nach Anspruch 1, umfassend orange emittierenden Phosphor, der oranges Licht unter Absorption mindestens von sichtbaren Lichtstrahlen oder ultravioletten Strahlen emittiert.

3. Element zum Emittieren von im Wesentlichen weißem Licht, umfassend Phosphor nach Anspruch 1 oder Anspruch 2 und ein Licht emittierendes Element, das sichtbare Lichtstrahlen im blauen Bereich emittiert.

4. Element zum Emittieren von im Wesentlichen weißem Licht nach Anspruch 3, bei dem das Element eine Licht-emittierende Diode ist.

5. Element zum Emittieren von im Wesentlichen weißem Licht nach Anspruch 3, bei dem das Element eine Laserdiode ist.

**Revendications**

1. Phosphore représenté par la formule générale :

   a $(Sr_{1-x}Eu_{x(1-y)}Yb_{xy})$ O·$SiO_2$, dans lequel
   a se situe dans la plage 2,9≤a≤3,1
   x se situe dans la plage 0,005≤x≤0,1 et
   y se situe dans la plage 0,001≤y≤0,1.

2. Phosphore selon la revendication 1 comprenant un phosphore émettant dans l'orange qui émet une lumière orange en absorbant au moins les rayons de la lumière visible ou les rayons ultraviolets.

3. Elément pour émettre pour l'essentiel de la lumière blanche comprenant un phosphore tel que revendiqué dans la revendication 1 ou la revendication 2 et un élément émettant de la lumière qui émet des rayons de lumière visible dans la région bleue.

4. Elément pour émettre pour l'essentiel de la lumière blanche selon la revendication 3, dans lequel l'élément est une diode à émission de lumière.

5. Elément pour émettre pour l'essentiel de la lumière blanche selon la revendication 3, dans lequel l'élément est une diode laser.

FIG.1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10242513 A
- JP 2002060747 A
- JP 2006036943 A
- JP 2006514152 A